# EUROPEAN PATENT APPLICATION

(11) **EP 4 032 764 A1**
(43) Date of publication of application: **27.07.2022**
(21) Application number: 21153129.8
(22) Date of filing: 25.01.2021
(51) Int. Cl.: B60T 17/02, F04C 18/02

(54) **CENTRAL AIR SUPPLY**

(71) Applicant: ZF CV Systems Global GmbH, 3006 Bern (CH)
(72) Inventor: KOZLOWSKI, Bartosz, 51-669 Wroclaw (PL)
(74) Representative: Ohlendorf, Henrike

(57) **Abstract**

The invention relates to a central air supply comprising:
- an air supply system (10) adapted to provide pressurized air (DL), comprising a compressor (100), wherein the air supply system is adapted for connecting a major pneumatic system, such that pressurized air (DL) is supplied to the major pneumatic system (400) by the air supply system (10),
the major pneumatic system in particular is an air suspension and/or an air brake system,
characterized in that
- the compressor (100) is a scroll type compressor (102).

## Description

The invention relates to a central air supply according to the preamble of claim 1. Such central air supply air comprises a supply system adapted to provide pressurized air, comprising a compressor, wherein the air supply system is adapted for connecting a major pneumatic system, such that pressurized air is supplied to the major pneumatic system by the air supply system.

Vehicles with one or more pneumatic systems are generally known. Pneumatic systems utilize pressurized gas, in particular pressurized air, as a source of mechanic energy. In order to provide pressurized air to a pneumatic system of the vehicle, a vehicle comprises one or more air supply systems with a compressor.

Typically, a reciprocating compressor is used as a compressor in a central air supply system.

In JP 4 723 432 B2 an air suspension device is described to use a scroll compressor as an air compressor serving as a source of compressed air, thereby reducing operating noise when mounted on a vehicle, improving quietness, and improving vehicle riding. However, such allocation is neither as a central air supply nor for a major pneumatic system for increasing the safety of a vehicle. An object of the present invention is to provide an air suspension device capable of improving comfort.

The reason for use of a reciprocating compressor as a compressor in a central air supply system is however, that some of the pneumatic systems are adapted to fulfill vehicle functions, in particular for increasing the safety -rather than the comfort-- of the vehicle, one of which safety relevant major pneumatic system is the air brake system or air suspension of the vehicle. A major pneumatic system in particular is an air suspension and/or an air brake system. Such major pneumatic system is subject to elaborated pressurizing values, limits and control.

Thus, the compressors used to supply air for these and other such like major pneumatic systems have to observe high standards. In particular electronically controlled air suspension has become a major aspect of vehicle safety.

Also, compressors can still be improved with respect to efficiency, weight and noise emission and the system complexity of a compressor can still be reduced. The high quality compressors used to supply air for the above mentioned major pneumatic systems still have to observe high standards; thus it is a sensitive task to allow for improvements with respect to efficiency, weight and noise emission. It is therefore desirable to address at least one of the above problems.

This is where the invention comes in, the object thereof is to improve specifically a central air supply with an air supply system comprising a compressor for connection of a major pneumatic system. Preferably, the compressor shall be improved with respect to efficiency, weight, noise emission and system complexity.

The object is solved with a central air supply comprising:
- an air supply system adapted to provide pressurized air, comprising a compressor, wherein the air supply system is adapted for connecting a major pneumatic system, such that pressurized air is supplied to the major pneumatic system by the air supply system. The major pneumatic system in particular is an air suspension and/or an air brake system.

In accordance with the invention, it is proposed, that the compressor is a scroll type compressor.

The invention is based on the finding, that it is beneficial to provide pressurized air on board of a vehicle. A scroll type compressor provides several advantages. Compared to reciprocating compressors, a scroll type compressor requires approximately 70% less moving parts, emits significantly less vibrations and noise during operation, is approximately 20% more efficient and of less weight.

The invention includes the finding, that scroll type compressors, which are normally used for refrigerating applications or for the charging of combustion engines -thus more or less for increasing comfort-- can be beneficially applied in a central air supply system for supplying air to a major pneumatic system of a vehicle.

The invention further includes the finding, that the advantages of a scroll type compressor are particularly relevant for an application in a central air supply system of a vehicle. This is in particular because reduced noise and vibrations are important factors for passenger comfort and reduced weight and increased efficiency contributes to energy efficiency of the vehicle, and a reduced amount of moving parts increases the reliability of the compressor.

Further, the scroll compressor has been found to provide structural development to supply air subject to elaborated pressurizing values, limits and control sufficiently for major pneumatic systems.

Preferably the major pneumatic system is an air suspension system or the major pneumatic system is an air brake system. Preferably, the pneumatic system comprises one or more of a number of various major pneumatic systems, wherein pressurized air is supplied to the major pneumatic system by the air supply system.

The invention leads to a system of central air supply as claimed in claim 3. In this development, the system comprises the central air supply and a pneumatic system. The pneumatic system comprises one or more of a number of various major pneumatic systems, wherein pressurized air is supplied to the major pneumatic system by the air supply system.

Further developments of the invention can be found in the dependent claims and show particularly advantageous possibilities to realize above described concept in light of the object of the invention and regarding further advantages.

In accordance with a preferred development, it is proposed that the pneumatic system is an air suspension system. In accordance with a preferred development, it is proposed that the pneumatic system is an air brake system. In accordance with a preferred development, it is proposed that the pneumatic system is a cleaning system, in particular a sensor cleaning system.

In accordance with a preferred development, it is proposed that the vehicle comprises a pressurized air supply, in particular a pressurized air tank. By means of a pressurized air supply, the generation of pressurized air and the usage of pressurized air can be decoupled. This means, that pressurized air can be generated, stored and then used at a later point in time.

In accordance with a preferred development, it is proposed that the vehicle is an electric vehicle. In particular, the electric vehicle comprises an electric vehicle powertrain as well as a vehicle battery or a hydrogen fuel cell. In an electric vehicle, the scroll type compressor is particularly advantageous because of its increased energy efficiency. The reduced energy consumption of the scroll type compressor is beneficial for the range of the vehicle in terms of the distance that can be travelled before the battery has to be charged. Also the reduced noise emission of a scroll type compressor will be particularly beneficial in an electric vehicle, as the overall noise emission of an electric powertrain is reduced compared to a vehicle with a combustion engine.

In accordance with a preferred development, it is proposed that the vehicle is a commercial vehicle, in particular a truck or an agricultural vehicle such as a tractor or a construction machine. In accordance with a preferred development, it is proposed that the vehicle is a passenger vehicle.

These and other aspects of the invention will be apparent from and elucidated with reference to the embodiments described hereinafter. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

Further advantages, features and details of the invention result from the following description of the preferred embodiments as well as from the drawings, which show in:
- Fig. 1: a fluid compressing arrangement for a scroll type compressor,
- Fig. 2: a scroll type compressor in a perspective view, with a section of the compressor housing removed for illustration purposes,
- Fig. 3: a vehicle according to the concept of the invention with a scroll type compressor.

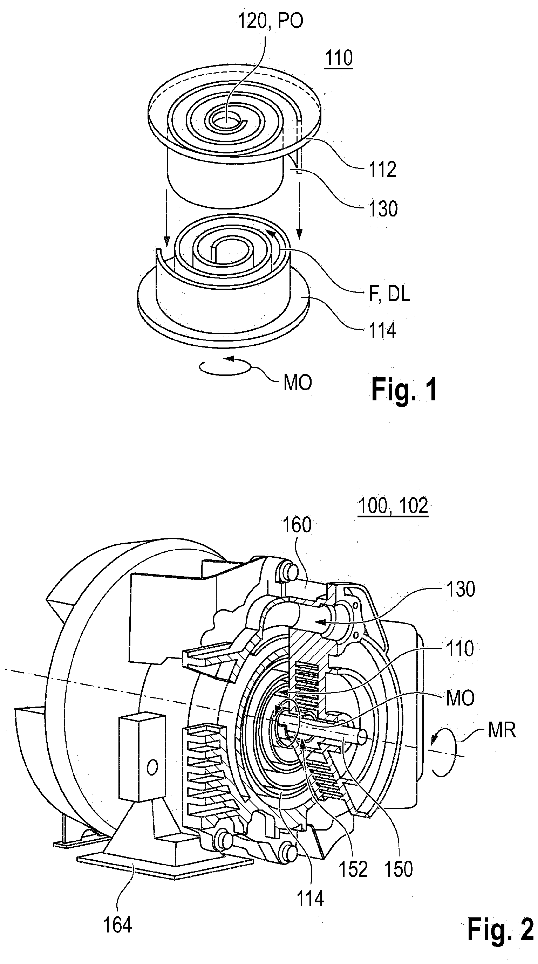

Fig. 1 shows a fluid compressing arrangement 110, comprising a first, stationary scroll 112 and a corresponding second orbiting scroll 114 in an exploded view. Both scrolls 112, 114 are to be assembled as indicated by the two arrows. Both scrolls 112, 114 move relative to each other in an orbiting motion MO of the orbiting scroll 114 and therefore interact during operation of the scroll compressor 102 such that fluid, in particular air, is trapped and pumped in segments that are traveling during the orbiting motion MO of the orbiting scroll 114, in particular starting from an inlet port 130 at the outer circumference towards the center of the scrolls 112, 114.

Through this operation, the fluid F, in particular the air DL, is subsequently compressed as the segments of trapped fluid F are subsequently reduced in volume as the trapped fluid F is moved inwards in the helical structure between the scrolls 112, 114. An outlet pressure PO is provided at an outlet port 120 located at the center of one of the scrolls 112, 114, in particular as shown here of the stationary scroll 112.

Fig. 2 shows a scroll type compressor 102 in a perspective cut view, in which the fluid compressing arrangement 110 is visible. The scroll type compressor 102 comprises a compressor housing 160, which provides a mechanical structure for fixing its components, in particular the fluid compressing arrangement 110 and for shielding said components from outer influences.

The orbiting scroll 114 is attached to an excentric mechanism 152, which again is operatively coupled to a compressor shaft 150. By applying a rotating drive motion MR, the orbiting motion MO of the orbiting scroll 114 can be generated in order to provide an output pressure PO at the outlet port 120, which is not visible in Fig. 2 as it is hidden by the compressor housing 160.

The rotating drive motion MR is preferably provided by an electric compressor motor 180 (not shown here) or mechanically by means of a drive train of the vehicle 1000. The compressor housing 160 preferably comprises a housing mount 164 adapted to mechanically fix of the compressor housing 160 to the vehicle 1000.

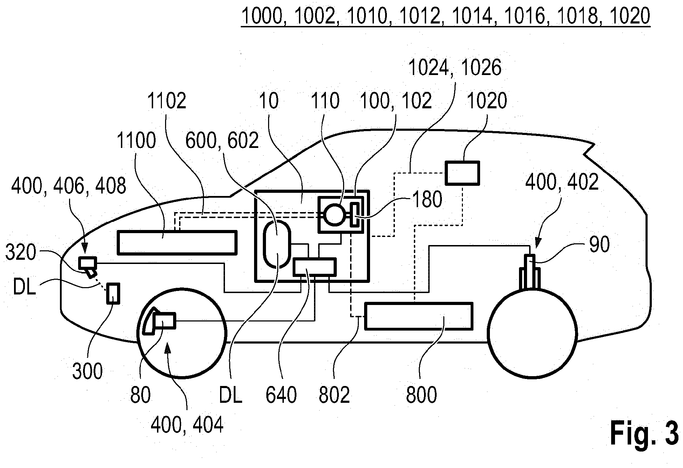

Fig. 3 shows a vehicle 1000 in form of an electric vehicle 1002. The car shown here is a passenger vehicle 1020. In other preferred embodiments of the invention, the vehicle 1000 is a commercial vehicle 1010, in particular a truck 1012 or an agricultural vehicle 1014 such as a tractor 1016 or a construction machine 1018. Therefore, the below description applies to any of these vehicles.

The vehicle 1000 comprises an air supply system 10 of a central air supply with a compressor 100 in the form of a scroll type compressor 102. The air supply system 10 of the central air supply further comprises a pressurized air supply 600 in the form of a pressurized air tank 602 which is adapted to store pressurized air DL, in particular pressurized air DL generated by the scroll type compressor 102.

The air supply system 10 of the central air supply further comprises a valve block 640, which is adapted to pneumatically connect the scroll type compressor 102 to the pressurized air supply 600 in a selective manner. The valve block 640 is further adapted to pneumatically connect the scroll type compressor 102 and/or the pressurized air supply 600 to at least one pneumatic systems 400 in a selective manner, in particular to supply the at least one pneumatic system 400 with a pressurized air DL. The valve block 640 preferably comprises one or more solenoid valves and/or relay valves which are controllable by an electronic control unit such as the vehicle control unit 1020. The air supply system 10 is adapted to provide pressurized air DL generated by the scroll type compressor 102 with an outlet pressure PO to the at least one pneumatic system 400.

The vehicle 1000 comprises a first pneumatic system 400 in the form of an air suspension system 402 as one form of a major pneumatic system. The air suspension system 402 is supplied with pressurized air DL by the air supply system 10. For this purpose, the air supply system 10, in particular the valve block 640 is pneumatically connected to at least one air spring 90, one of which is exemplary shown in Fig. 3.

The vehicle 1000 further comprises a second pneumatic system 400 in the form of an air brake system 404 as one form of a major pneumatic system. The air brake system is supplied with pressurized air DL by the air supply system 10. The air brake system 404 comprises at least one pneumatic brake cylinder 80, one of which is exemplary shown in Fig. 3. The illustration is strongly simplified, not showing any brake control means such as a brake control valve or a brake pedal.

The vehicle 1000 further comprises a third pneumatic system 400 in the form of a cleaning system 406 as part of the pneumatic system. A cleaning system 406 utilizes pressurized air DL in order to clean surfaces of the vehicle. Here, the cleaning system 406 is in the form of a sensor cleaning system 408, adapted to clean the surface of one or more sensors 300 by applying pressurized air DL and optionally other cleaning liquids by means of a cleaning nozzle 320.

The scroll type compressor 102 comprises a fluid compressing arrangement 110, which is operatively coupled to an electric compressor motor 180, providing rotating drive motion MR. In other, alternative embodiments of the invention, the fluid compressing arrangement 110 is operatively coupled to a vehicle powertrain 1100 of the vehicle 1000 by means of a powertrain coupling shaft 1102. In such embodiments, the vehicle powertrain 1100 provides the rotating drive motion MR for the scroll type compressor 102.

The vehicle 1000 further comprises a vehicle battery 800, adapted to provide electric energy to the vehicle powertrain 1100. The battery 800 is further adapted to provide electric energy to the electric compressor motor 180 by means of a compressor power line 802 for driving the scroll type compressor 102.

### List of reference signs (part of the description)

- 10: air supply system of a central air supply
- 80: pneumatic brake cylinder
- 90: air spring
- 100: compressor
- 102: scroll type compressor
- 110: fluid compressing arrangement
- 112: stationary scroll
- 114: orbiting scroll
- 120: outlet port
- 130: inlet port
- 150: compressor shaft
- 152: excentric mechanism
- 160: compressor housing
- 164: housing mount
- 180: electric compressor motor
- 300: sensor
- 320: cleaning nozzle
- 400: pneumatic system as part of a system with a central air supply
- 402: air suspension system as one form of a major pneumatic system
- 404: air brake system as one form of a major pneumatic system
- 406: cleaning system
- 408: sensor cleaning system
- 600: pressurized air supply
- 602: pressurized air tank
- 640: valve block
- 800: vehicle battery
- 802: compressor power line
- 1000: vehicle
- 1002: electric vehicle
- 1010: commercial vehicle
- 1012: truck
- 1014: agricultural vehicle
- 1016: tractor
- 1018: construction machine
- 1020: passenger vehicle
- 1100: vehicle powertrain
- 1102: powertrain coupling shaft

- DL: pressurized air
- F: fluid
- MO: orbiting motion
- MR: rotating drive motion
- PO: outlet pressure

## Claims

1. Central air supply, comprising:
- an air supply system (10) adapted to provide pressurized air (DL), comprising a compressor (100), wherein the air supply system is adapted for connecting a major pneumatic system, such that pressurized air (DL) is supplied to the major pneumatic system (400) by the air supply system (10),
the major pneumatic system in particular is an air suspension and/or an air brake system,
**characterized in that**
- the compressor (100) is a scroll type compressor (102).

2. Central air supply according to claim 1, **characterized in that**
- the major pneumatic system (400) is an air suspension system (402) or
- the major pneumatic system (400) is an air brake system (404).

3. System of central air supply according to claim 1 or 2 and pneumatic system (400), **characterized in that** the pneumatic system (400) comprises one or more of a number of various major pneumatic systems, wherein
- pressurized air (DL) is supplied to the major pneumatic system (400) by the air supply system (10).

4. System of claim 3, wherein the pneumatic system comprises an air suspension system (402) and/or an air brake system (404),

5. System of claim 3 or 4, wherein the pneumatic system (400) comprises a cleaning system (406), in particular a sensor cleaning system (408).

6. System of one of claims 3 to 5, wherein the pneumatic system (400) comprises a pressurized air supply (600), in particular a pressurized air tank (602).

7. Vehicle (1000) comprising the central air supply of claim 1 or 2 or the system of one of claims 3 to 6.

8. Vehicle (1000) according to claim 7, **characterized in that** the vehicle (1000) is an electric vehicle (1002).

9. Vehicle (1000) according to claim 7 or 8, **characterized in that** the vehicle (1000) is a commercial vehicle (1010), in particular a truck (1012) or an agricultural vehicle (1014) such as a tractor (1016) or a construction machine (1018).

10. Vehicle (1000) according to one of claims 7 to 9, **characterized in that** the vehicle (1000) is a passenger vehicle (1020).
